# EUROPÄISCHE PATENTSCHRIFT

(11) **EP 1 076 406 B1**
(45) Veröffentlichungstag und Bekanntmachung des Hinweises auf die Patenterteilung: **01.03.2006**
(21) Anmeldenummer: 00116151.2
(22) Anmeldetag: 01.08.2000
(51) Int. Cl.: H02M 7/538

(54) **Halbbrückenwechselrichter**
Half bridge inverter
Onduleur demi-pont

(30) Priorität: 11.08.1999 DE 19937925
(43) Veröffentlichungstag der Anmeldung: 14.02.2001
(73) Patentinhaber: Patent-Treuhand-Gesellschaft für elektrische Glühlampen mbH, 81543 München (DE)
(72) Erfinder: Franck, Felix, Dr., 80333 München (DE)
(74) Vertreter: Raiser, Franz

(56) Entgegenhaltungen:
- EP-A- 0 440 245
- EP-A- 0 492 715
- EP-A- 0 881 864
- US-A- 5 502 635
- US-A- 5 703 438
- PATENT ABSTRACTS OF JAPAN vol. 016, no. 570 (E-1297), 10. Dezember 1992 (1992-12-10) -& JP 04 222469 A (MATSUSHITA ELECTRIC WORKS LTD), 12. August 1992 (1992-08-12)

## Beschreibung

Die vorliegende Erfindung betrifft einen Halbbrückenwechselrichter gemäß dem Oberbegriff von Anspruch 1.

Ein derartiger aus dem Stand der Technik bekannter Halbbrückenwechselrichter (siehe DE-A 197 22 124) ist in Fig. 1 dargestellt. Eine erste und eine zweite Eingangsklemme E, N bilden einen Eingang, dem ein Speicherkondensator C3 parallelgeschaltet ist. Parallel zu dem Speicherkondensator C3 liegt als Überspannungsableiter zum einen ein Varistor, d.h. ein nichtlinearer Widerstand, der in der Praxis die benötigte Surge-Festigkeit sicherstellt, weiterhin die Serienschaltung aus einem ersten und einem zweiten Koppelkondensator C1, C2, deren Mittelpunkt mit der ersten Ausgangsklemme B des Halbbrückenwechselrichters verbunden ist. Die Koppelkondensatoren C1, C2 bilden hierbei den passiven Brückenzweig des Halbbrückenwechselrichters. Der aktive Brückenzweig des Halbbrückenwechselrichters, umfassend einen ersten Schalter S1 sowie einen zweiten Schalter S2, ist mit seinem Mittelpunkt über eine Induktivität L1 mit der zweiten Ausgangsklemme A des Halbbrütkenwechselrichters verbunden, wobei die Induktivität L1 als Umschwinginduktivität wirkt. Den im Gegentakt betriebenen Schaltern S1 und S2 sind jeweils eine Freilaufdiode D1, D2 sowie ein Umschwingkondensator CS1, CS2 parallelgeschaltet.

Weiterhin ist aus der US-A 5 703 438 bekannt, zusätzlich zu der zentralen Umschwinginduktivität zwei weitere Umschwinginduktivitäten zu verwenden.

Ähnliches ist auch aus JP-A 04 222 469 bekannt. Dort ist eine Konfiguration angegeben, bei der neben der zentralen Umschwinginduktivität ein oder zwei weitere Umschwinginduktivitäten verwendet werden.

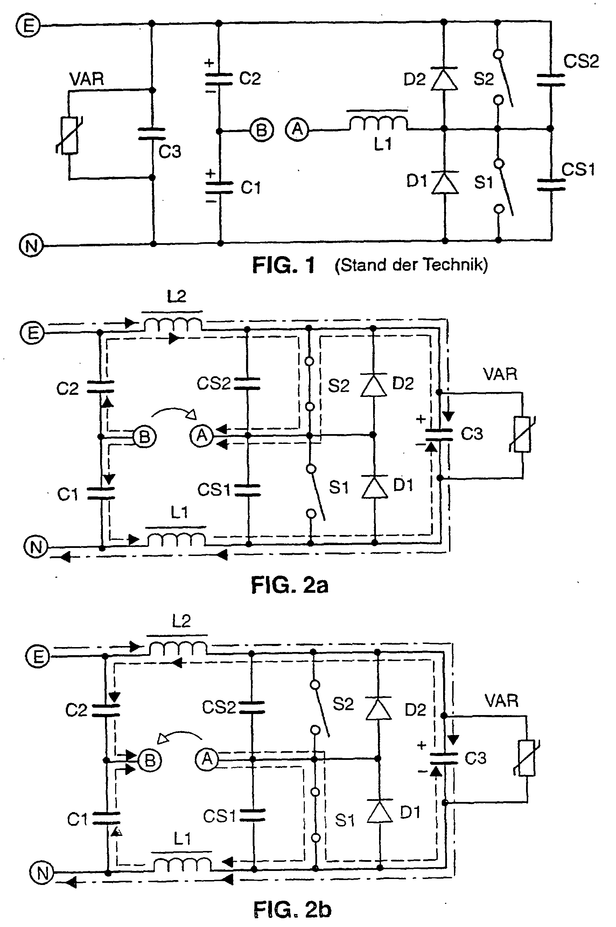

Nachteilig an dem in Fig. 1 dargestellten Halbbrückenwechselrichter ist zum einen, daß der durch C3 fließande Wechselstrom zwar durch C3 abgefiltert wird, jedoch dies in der Praxis nicht ausreichend ist, so daß es zu unerwünschten Rückwirkungen auf den Eingang E, N kommt. Für den Anwendungsfall, daß die Schaltung zur Bereitstellung einer Hochfrequenzwechselspannung an den Klemmen B,A dimensioniert ist, ergeben sich Probleme im Hinblick auf die Funkentstörung. Weiterhin trägt die Induktivität L1 sowohl die Strom- als auch die Magnetisierungsbelastung. Dadurch muß die Induktivität L1 groß dimensioniert werden, wodurch sich ein unerwünscht großer Platzbedarf ergibt.

Die Aufgabe der vorliegenden Erfindung besteht daher darin, diese Nachteile zu beseitigen, insbesondere einen Halbbrückenwechselrichter bereitzustellen, der sich bei kleinerer Bauart realisieren läßt.

Diese Aufgabe wird durch Lehre von Anspruch 1 gelöst.

Der erfindungsgemäße Halbbrückenwechselrichter hat den Vorteil, daß die Strom- und Magnetisierungsbelastung auf zwei Induktivitäten aufgeteilt ist. Die Strombelastung jeder Induktivität L1, L2 ist daher gegenüber der Strombelastung der Induktivität L1 gemäß Fig. 1 halbiert. Die Kupferverluste betragen somit nurmehr ein Viertel. Dies ermöglicht eine Realisierung durch kleinere Bauteile und reduziert somit den Platzbedarf auf einer Platine. Insbesondere bei höheren Leistungen erleichtert sich dadurch die Realisierung erheblich. Der Speicherkondensator C3 ist beim Erfindungsgegenstand in vorteilhafter Weise nicht mehr zwischen den Eingangsklemmen E, N angeordnet, sondern befindet sich quasi am anderen Ende der Schaltung. Sofern der Halbbrückenwechselrichter für Hochfrequenz dimensioniert wurde, sind damit die hochfrequenten Umladevorgänge maximal weit weg von den Eingangsklemmen E, N, so daß die Rückwirkungen der Umladevorgänge in C3 wesentlich geringeren Einfluß auf den Eingang E, N haben, als dies im Stand der Technik der Fall ist. Besonders vorteilhaft erhöht sich durch die Lage der Induktivitäten L1, L2 zwischen C3 und dem passiven Halbbrückenzweig aus den Koppelkondensatoren C1, C2 die Filterordnung um zwei Ordnungen, gesehen vom Eingang E, N. Dies führt zu einer deutlichen Verbesserung der Funkentstörung sowie zu einer Erhöhung der Surge-Festigkeit, sofern parallel zu C3 ein Überspannungsabieiter geschaltet ist. Das in einer Vorstufe links vom Eingang E, N in Fig. 2 vorzusehende Filter kann daher einfacher ausgeführt werden.

Ergänzend sei darauf hingewiesen, daß die Anordnung gemäß Fig. 1 - gesehen von den Eingangsklemmen E, N aus - lediglich ein Filter erster Ordnung aufweist, da alle Kapazitäten und der zum Speicherkondensator C3 parallelgeschaltete Überspannungsableiter VAR parallelgeschaltet sind.

Es kann vorgesehen werden, dem ersten Schalter eine erste Freilaufdiode und dem zweiten Schalter eine zweite Freilaufdiode parallel zu schalten. Weiterhin kann vorgesehen sein, daß ein erster Umschwingkondensator parallel zum ersten Schalter und/oder ein zweiter Umschwingkondensator parallel zum zweiten Schalter angeordnet ist.

Der optionale Überspannungsableiter VAR kann als nichtlinearer Widerstand, insbesondere als Varistor, realisiert sein.

Der Kapazitätswert des ersten Koppelkondensators kann in besonders vorteilhafter Weise im wesentlichen gleich dem Kapazitätswert des zweiten Koppelkondensators sein. Der Kapazitätswert des Speicherkondensators, der in dem erfindungsgemäßen Halbbrückenwechselrichter als Stützkondensator für den aktiven Brückenzweig wirkt, beträgt vorzugsweise das Zweifache des Kapazitätswerts des ersten und/oder des zweiten Koppelkondensators.

Bei einer besonders vorteilhaften Ausführungsform ist die erste Induktivität mit der zweiten Induktivität gekoppelt. Hierdurch läßt sich nicht nur eine Variante realisieren, bei der die erste und die zweite Induktivität auf einem einzigen Kern gewickelt sind, sondern die Kopplung kann auch so ausgeführt werden, daß die Hauptinduktivitäten der ersten und der zweiten Induktivität zu einer Glättung des Eingangsstroms führen und daß die Streuinduktivitäten der ersten und der zweiten Induktivität als Umschwinginduktivität wirken.

Weitere vorteilhafte Ausgestaltungen der Erfindung sind den abhängigen Ansprüchen zu entnehmen.

Im Folgenden werden Ausführungsbeispiele des erfindungsgemäßen Halbbrückenwechselrichters unter Hinweis auf die beigefügten Zeichnungen näher beschrieben. Es stellen dar:
Fig.1 einen aus dem Stand der Technik bekannten Halbbrückenwechselrichter;
Fig. 2 einen erfindungsgemäßen Halbbrückenwechselrichter, wobei strichliniert der Verlauf des Gleichstroms, gestrichelt der Verlauf der Wechselstromanteile eingezeichnet sind. Während Fig. 2a Gleichstrom- und Wechselstromverläufe bei geschlossenem Schalter S2 zeigt, zeigt Fig. 2b diese bei geschlossenem Schalter S1;
Fig. 3 zeigt eine Ausführungsform mit gekoppelten Induktivitäten L1, L2, wobei hinsichtlich der Stellungen der Schalter S1 und S2 Fig. 3a mit Fig. 2a und Fig. 3b mit Fig. 2b korrespondiert.

Sofern im nachfolgenden nicht anders angegeben bezeichnen gleiche Bezugszeichen in den verschiedenen Figuren gleiche Bauteile. Fig. 2a zeigt eine erste Ausführungsform eines erfindungsgemäßen Halbbrückenwechselrichters, wobei der von den Koppelkondensatoren C1, C2 gebildete passive Brückenzweig parallel zu den Eingangsklemmen E, N angeordnet ist. Der Mittelpunkt des passiven Brückenzweigs ist mit der Ausgangsklemme B verbunden. Der aktive Brückenzweig umfaßt zwei Schalter S1, S2 in Serienschaltung, deren Mittelpunkt mit der zweiten Ausgangsklemme A verbunden ist. Parallel zu jedem Schalter ist eine jeweilige Freilaufdiode D1, D2, sowie ein jeweiliger Umschwingkondensator CS1, CS2 angeordnet. Ein Speicherkondensator C3 ist dem aktiven Brückenzweig parallel geschaltet. Weiterhin ist in Fig. 2a ein optionaler Überspannungsableiter VAR eingezeichnet. Der Koppelkondensator C2 ist über eine Induktivität L2 mit dem Schalter S2 verbunden, während der Koppelkondensator C1 über eine Induktivität L1 mit dem Schalter S1 verbunden ist. Strichliniert eingezeichnet ist der Verlauf des Gleichstroms von der Eingangsklemme E über die Induktivität L2, den Speicherkondensator C3 (bei diesen Betrachtungen kann der Widerstand des Überspannungssableiters als unendlich angenommen werden), die Induktivität L1 zur zweiten Eingangsklemme N. Gestrichelt eingezeichnet sind die Verläufe der beiden Wechselstromanteile, wobei in Fig. 2a der Schalter S2 geschlossen ist ein erster Wechselstromanteil fließt von der Ausgangsklemme B durch den Koppelkondensator C2 über die Induktivität L2 durch den Schalter S2 zur zweiten Ausgangsklemme A. Der zweite Wechselstromanteil fließt von der Ausgangsklemme B über den Koppelkondensator C1, durch die Induktivität L1, den Speicherkondensator C3 und den geschlossenen Schalter S2 zur zweiten Ausgangsklemme A.

Fig. 2b zeigt die Verhältnisse bei geschlossenem Schalter S1. Im Vergleich zu Fig. 2a ist der Verlauf des Gleichstroms unverändert. Hinsichtlich der Wechselstromanteile verläuft ein erster von der Ausgangsklemme A durch den Schalter S1, durch die Induktivität L1, durch den Koppelkondensator C1 zur Ausgangsklemme B während ein zweiter Anteil von der Ausgangsklemme A, durch den Schalter S1, den Speicherkondensator C3, die Induktivität L2, den Koppelkondensator C2 zur Ausgangsklemme B fließt. Aus der Strombilanz an C3 geht hervor, daß der Speicherkondensator vom Gleichstrom geladen wird, während der jeweilige Wechselstromanteil den Speicherkondensator C3 entlädt.

In Serie zu den Ausgangsklemmen B, A wirkt als Umschwinginduktivität die Parallelschaltung der Induktivitäten L1, L2. Die Belastung verteilt sich damit auf die zwei Induktivitäten L1 und L2. Die bezüglich der Eingangsklemmen E, N seriell wirkenden Induktivitäten L1, L2 führen zu einer effektiven Glättung des Eingangsstroms. Im Gegensatz dazu werden bei dem Halbbrückenwechselrichter gemäß Fig. 1 Wechselstromanteile vom Kondensator C3 nur herausgesiebt.

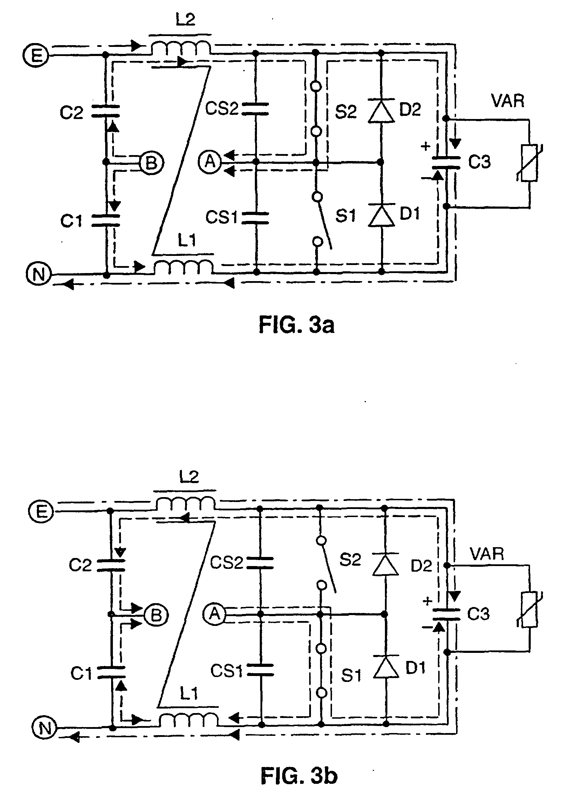

Fig. 3a, 3b zeigen eine weitere Ausführungsform des erfindungsgemäßen Halbbrückenwechselrichters. Fig. 3a zeigt die Gleichstrom- und Wechselstromverläufe bei geschlossenem Schalter S2, Fig. 3b bei geschlossenem Schalter S1, wobei diese denjenigen der Fig. 2a und 2b entsprechen. Im Gegensatz zu den Ausführungsformen gemäß den Fig. 2a und Fig. 2b sind in den Ausführungsformen gemäß Fig. 3a und Fig. 3b die beiden Induktivitäten L1, L2 miteinander gekoppelt. Hierdurch wird der Glättungseffekt auf den Eingangsstrom deutlich verstärkt. Die Hauptinduktivitäten der beiden Induktivitäten L1, L2 führen zu einer Glättung des Eingangsstroms, während die Streuinduktivitäten der beiden Induktivitäten L1, L2 als Umschwinginduktivität wirken. Eine Realisierung, bei der beide Induktivitäten L1, L2 auf einem einzigen Kern gewickelt sind, ist möglich.

Im Vergleich zu dem in Fig. 1 dargestellten Halbbrückenwechselrichter ist bei den erfindungsgemäßen Halbbrückenwechselrichtern die Filterordnung um 2 Ordnungen - gesehen vom Eingang E, N - erhöht. Dies führt zu einer deutlichen Verbesserung der Funkentstörung sowie zu einer Erhöhung der Surge-Festigkeit, sofern parallel zum Speicherkondensator C3 ein Überspannungsableiter VAR geschaltet ist.

## Patentansprüche

1. Halbbrückenwechselrichter umfassend:
eine erste und eine zweite Eingangsklemme (E, N), die einen Eingang des Halbbrückenwechselrichter bilden,
eine erste und eine zweite Ausgangsklemme (B, A), die einen Ausgang des Halbbrückenwechselrichter bilden,
eine Serienschaltung aus einem ersten und einem zweiten Koppelkondensator (C1, C2), die dem Eingang parallelgeschaltet ist und einer passiven Brückenzweig bildet, wobei ein Mittelpunkt der Serienschaltung aus dem ersten und dem zweiten Koppelkondensator (C1, C2) mit der ersten Ausgangsklemme (B) verbunden ist,
eine Serienschaltung aus einem ersten und einem zweiten Schalter (S1, S2), die einer aktiven Brückenzweig bildet und deren Mittelpunkt mit der zweiten Ausgangsklemme (A) verbunden ist, wobei der Halbbrückenwechselrichter eine Umschwinginduktivität umfasst,
**dadurch gekennzeichnet,**
**daß** ein Speicherkondensator (C3) parallel zum aktiven Brückenzweig angeordnet ist, und der erste Koppelkondensator (C1) unmittelbar über eine erste Induktivität (L1) und der zweite Koppelkondensator (C2) unmittelbar über eine zweite Induktivität (L2) mit dem Speicherkondensator (C3) verbunden ist, wobei die erste und zweite Induktivität die einzigen Komponenten der Umschwinginduktivität bilden.

2. Halbbrückenwechselrichter nach Anspruch 1,
**dadurch gekennzeichnet,**
**daß** dem ersten Schalter (S1) eine erste Freilaufdiode (D1) und dem zweiten Schalter eine zweite Freilaufdiode (D2) parallelgeschaltet ist.

3. Halbbrückenwechselrichter nach Anspruch 1 oder 2,
**dadurch gekennzeichnet,**
**daß** ein erster Umschwingkondensator (CS1) parallel zum ersten Schalter (S1) und/oder ein zweiter Umschwingkondensator (CS2) parallel zum zweiten Schalter (S2) angeordnet ist.

4. Halbbrückenwechselrichter nach einem der vorhergehenden Ansprüche,
**dadurch gekennzeichnet,**
**daß** dem Speicherkondensator (C3) ein nichtlinearer Widerstand (VAR) als Überspannungsableiter parallelgeschaltet ist.

5. Halbbrückenwechselrichter nach einem der vorhergehenden Ansprüche,
**dadurch gekennzeichnet,**
**daß** der Kapazitätswert des ersten Koppelkondensators (C1) im wesentlichen gleich dem Kapazitätswert des zweiten Koppelkondensators (C2) ist.

6. Halbbrückenwechselrichter nach einem der vorhergehenden Ansprüche,
**dadurch gekennzeichnet,**
**daß** der Kapazitätswert des Speicherkondensators (C3) im wesentlichen das Zweifache des Kapazitätswerts des ersten und/oder des zweiten Koppelkondensators (C1, C2) beträgt.

7. Halbbrückenwechselrichter nach einem der vorhergehenden Ansprüche,
**dadurch gekennzeichnet,**
**daß** die erste Induktivität (L1) mit der zweiten Induktivität (L2) gekoppelt ist.

8. Halbbrückenwechselrichter nach Anspruch 7,
**dadurch gekennzeichnet,**
**daß** die erste und die zweite Induktivität (L1, L2) auf einem einzigen Kern gewickelt sind.

9. Halbbrückenwechselrichter nach Anspruch 7 oder 8,
**dadurch gekennzeichnet,**
**daß** die Kopplung dergestalt ist, daß die Hauptinduktivitäten der ersten und der zweiten Induktivität (L1, L2) zu einer Glättung des Eingangsstroms führen und daß die Streuinduktivitäten der ersten und der zweiten Induktivität (L1, L2) als Umschwinginduktivität wirken.

## Claims

1. Half-bridge inverter comprising:
a first and a second input terminal (E, N), which form an input of the half-bridge inverter,
a first and a second output terminal (B, A), which form an output of the half-bridge inverter,
a series circuit comprising a first and a second coupling capacitor (C1, C2), which series circuit is connected in parallel with the input and forms a passive bridge path, a midpoint of the series circuit made up of the first and the second coupling capacitor (C1, C2) being connected to the first output terminal (B),
a series circuit comprising a first and a second switch (S1, S2), which series circuit forms an active bridge path and has its midpoint connected to the second output terminal (A), the half-bridge inverter comprising a polarity-reversal inductor,
**characterized in that**
a storage capacitor (C3) is arranged in parallel with the active bridge path, and the first coupling capacitor (C1) is connected directly to the storage capacitor (C3) via a first inductor (L1), and the second coupling capacitor (C2) is connected directly to the storage capacitor (C3) via a second inductor (L2), the first and second inductors forming the only components of the polarity-reversal inductor.

2. Half-bridge inverter according to Claim 1,
**characterized in that**
the first switch (S1) has a first freewheeling diode (D1) connected in parallel with it, and the second switch has a second freewheeling diode (D2) connected in parallel with it.

3. Half-bridge inverter according to Claim 1 or 2,
**characterized in that**
a first polarity-reversal capacitor (CS1) is arranged in parallel with the first switch (S1) and/or a second polarity-reversal capacitor (CS2) is arranged in parallel with the second switch (S2).

4. Half-bridge inverter according to one of the preceding claims,
**characterized in that**
the storage capacitor (C3) has a nonlinear resistor (VAR) connected in parallel with it as a surge arrester.

5. Half-bridge inverter according to one of the preceding claims,
**characterized in that**
the capacitance value of the first coupling capacitor (C1) is essentially the same as the capacitance value of the second coupling capacitor (C2).

6. Half-bridge inverter according to one of the preceding claims,
**characterized in that**
the capacitance value of the storage capacitor (C3) is essentially twice the capacitance value of the first and/or the second coupling capacitor (C1, C2).

7. Half-bridge inverter according to one of the preceding claims,
**characterized in that**
the first inductor (L1) is coupled to the second inductor (L2).

8. Half-bridge inverter according to Claim 7,
**characterized in that**
the first and second inductors (L1, L2) are wound on a single core.

9. Half-bridge inverter according to Claim 7 or 8,
**characterized in that**
the coupling is such that the principal inductances of the first and second inductors (L1, L2) cause the input current to be smoothed, and that the leakage inductances of the first and second inductors (L1, L2) act as a polarity-reversal inductor.

## Revendications

1. Onduleur à demi-pont comprenant :
une première et une deuxième bornes (E, N)d'entrée, qui forment une entrée de l'onduleur à demi-pont ;
une première et une deuxième bornes (B, A) de sortie, qui forment une sortie de l'onduleur à demi-pont ;
un circuit série constitué d'un premier et d'un deuxième condensateurs (C1, C2) de couplage, qui est monté en parallèle à l'entrée et qui forme une branche passive du pont, un point médian du circuit série constitué du premier et du deuxième condensateurs (C1, C2) de couplage étant reliés à la première borne (B) de sortie ;
un circuit série constitué d'un premier et d'un deuxième interrupteurs (S1, S2), qui forme une branche active du pont et dont le point médian est relié à la deuxième borne (A) de sortie, l'onduleur à demi-pont comprenant une inductance d'oscillation,
**caractérisé**
**en ce qu'**un condensateur (C3) d'emmagasinage est monté parallèlement à la branche active du pont et le premier condensateur (C1) de couplage est relié directement par une première inductance (L1) et le deuxième condensateur (C2) de couplage par une deuxième inductance (L2) au condensateur (C3) d'emmagasinage, la première et la deuxième inductances formant les composants uniques de l'inductance d'oscillation.

2. Onduleur à demi-pont suivant la revendication 1,
**caractérisé**
**en ce qu'**une première diode (D1) de roue libre est montée en parallèle au premier interrupteur (S1) et une deuxième diode (D2) de roue libre est montée en parallèle au deuxième interrupteur.

3. Onduleur à demi-pont suivant la revendication 1 ou 2,
**caractérisé**
**en ce qu'**un premier condensateur (CS1) d'oscillation est monté en parallèle au premier interrupteur (S1) et/ou un deuxième condensateur (CS2) d'oscillation est monté en parallèle au deuxième interrupteur (S2).

4. Onduleur à demi-pont suivant l'une des revendications précédentes,
**caractérisé**
**en ce qu'**une résistance (VAR) non linéaire est montée en tant que limiteur de tension en parallèle au condensateur (C3) d'emmagasinage.

5. Onduleur à demi-pont suivant l'une des revendications précédentes,
**caractérisé**
**en ce que** la capacité du premier condensateur (C1) de couplage est sensiblement égale à la capacité du deuxième condensateur (C2) de couplage.

6. Onduleur à demi-pont suivant l'une des revendications précédentes,
**caractérisé**
**en ce que** la capacité du condensateur (C3) d'emmagasinage est égale sensiblement au double de la capacité du premier et/ou du deuxième condensateur(s) (C1, C2) de couplage.

7. Onduleur à demi-pont suivant l'une des revendications précédentes,
**caractérisé**
**en ce que** la première inductance (L1) est couplée à la deuxième inductance (L2).

8. Onduleur à demi-pont suivant la revendication 7,
**caractérisé**
**en ce que** la première et la deuxième inductances (L1, L2) sont enroulées sur un noyau unique.

9. Onduleur à demi-pont suivant la revendication 7 ou 8,
**caractérisé**
**en ce que** le couplage est tel que les inductances principales des première et deuxième inductances (L1, L2) entraînent un lissage du courant d'entrée et que les inductances de fuite de la première et de la deuxième inductances (L1, L2) servent d'inductances d'oscillation.
